# EUROPÄISCHE PATENTSCHRIFT

(11) **EP 2 877 069 B1**
(45) Veröffentlichungstag und Bekanntmachung des Hinweises auf die Patenterteilung: **27.03.2019**
(21) Anmeldenummer: 13736561.5
(22) Anmeldetag: 11.07.2013
(51) Int. Cl.: A47J 43/10, A47J 43/25, A47J 43/08

(54) **SCHEIBENREIBE**
DISK GRATER
RÂPE CIRCULAIRE

(30) Priorität: 12.07.2012 CH 10752012
(43) Veröffentlichungstag der Anmeldung: 03.06.2015
(73) Patentinhaber: Groupe SEB Schweiz GmbH, 8152 Glattpark (Opfikon) (CH)
(72) Erfinder: HERREN, Bruno, 6375 Beckenried (CH)
(74) Vertreter: Rentsch Partner AG
(86) Internationale Anmeldenummer: PCT/EP2013/064663
(87) Internationale Veröffentlichungsnummer: WO 2014/009459

(56) Entgegenhaltungen:
- WO-A1-2007/128154
- DE-U1-202007 017 012
- GB-A- 2 327 864
- GB-A- 2 465 834
- US-A1- 2009 114 104

## Beschreibung

### TECHNISCHES GEBIET

Die Erfindung betrifft ein Gerät zum Bearbeiten von Lebensmitteln.

### STAND DER TECHNIK

Aus dem Stand der Technik sind eine Vielzahl von Scheibenreiben oder Scheibenraffeln bekannt, die beispielsweise entweder als Einzelgeräte oder als Zusatzgeräte für Küchenmaschine verkauft werden. Im Regelfall sind solche Scheibenraffeln elektrisch betrieben. Sie verfügen über einen Einfüllschacht für das zu zerkleinernde Gemüse, einen Stutzen mit dem das Gemüse in den Einfüllschacht gedrückt wird, der gleichzeitig auch als Schneidschutz dient und einen elektrischen Antrieb für die Schneidscheibe. Je nach gewünschtem Schneidergebnis können die Schneidscheiben entsprechend ausgetauscht werden. Als Beispiel für eine Vielzahl von elektrischen Scheibenraffeln sei an dieser Stelle die Elektroraffel OPTUS Z1, der Firma OPTUS erwähnt. Manuell betriebene Geräte die vom Aufbau im wesentlichen gleich sind, wie jene die elektrisch betrieben werden und über einen Kurbelantrieb verfügen sind beispielsweise von der Firma Zyliss bekannt. Nachteilig an den Kurbelantrieben ist, dass die Schneidscheibe häufig nur mit geringem Drehmoment angetrieben werden kann und verglichen mit einem Elektroantrieb nur wesentlich geringere Drehzahlen erzielt werden können. In Folge dessen lassen sich bei hartem oder fasrigem Schneidgut nur mässige Ergebnisse erzielen. Das Schneidgut wird entweder von den Klingen der Schneidscheibe mitgenommen und nicht zerschnitten oder es kommt zum Blockieren der Schneidscheibe.

Die Druckschrift GB 2 327 864 A offenbart ein Gerät zum Bearbeiten von Lebensmitteln mit einem Oberteil und einem Antrieb, aufsetzbar auf einen Unterteil, umfassend eine mittels dem Antrieb antreibbare und in eine Drehbewegung versetzbare Arbeitseinheit, wobei der Antrieb ein Antriebsrad mit einer Aussenverzahnung umfasst und die Arbeitseinheit eine Schneidscheibe aufweist.

### DARSTELLUNG DER ERFINDUNG

Aufgabe der Erfindung ist es daher ein manuell betriebenes Gerät zum Bearbeiten von Lebensmitteln zur Verfügung zu stellen, das die oben genannten Nachteile nicht aufweist.

Erfindungsgemäss wird hierzu ein Gerät mit einem Oberteil, einem Antrieb und vorzugsweise einem Unterteil mit Arbeitsbehälter und einer mittels dem Antrieb antreibbaren und in eine Drehbewegung versetzbaren Arbeitseinheit zur Verfügung gestellt. Der Antrieb steht in Wirkverbindung mit der Arbeitseinheit. Bei der Arbeitseinheit handelt es sich um eine Schneidscheibe.

Der Antrieb weist beispielsweise eine Schnurzugsrolle mit einer konzentrischen Ausnehmung auf, in der innenliegend ein Federelement angeordnet ist, wobei das Federelement in Wirkverbindung mit der Schnurzugsrolle steht. Durch die Anordnung des Federelements in der konzentrischen Ausnehmung der Schnurzugsrolle kann die Bauhöhe des Geräts entsprechend reduziert und so die Gefahr des Kippens bei manueller Betätigung des Schnurzugs reduziert werden.

Das Federelement, vorzugsweise eine Spiralfeder ist mit der Schnurzugsrolle derart verbunden, dass bei Betätigung des Antriebs in einer ersten Drehrichtung - also beim Zug an der Zugschnur - das Federelement vorgespannt wird und sich das Federelement nach dem Loslassen der Zugschnur wieder entspannt und dabei die Schnurzugrolle in die Gegenrichtung dreht. In einer bevorzugten Ausführungsform der Erfindung ist der Antrieb im Oberteil des Geräts angeordnet. Die Schnurzugsrolle ist gemessen an einer Zentralachse des Geräts, parallel beabstandet von dieser Zentralachse angeordnet. Die Schnur der Schnurzugsrolle ist mit einem Haltegriff versehen. Die Schnur tritt aus dem Oberteil des Geräts, gegenüberliegend einer Lebensmittelzufuhreinrichtung aus. Bevorzugt ist diese Austrittsstelle, in Abhängigkeit einer geometrischen Form des Oberteils derart angeordnet, dass der Abstand zwischen der Zentralachse A des Geräts und der Austrittsstelle maximal ist. Diese Anordnung bewirkt eine maximale Kraftübertragung auf die Arbeitseinheit und eine verbesserte die Schneidwirkung. In einer bevorzugten Ausführungsform handelt es sich um einen manuellen Antrieb.

Das erfindungsgemässe Gerät hat einen Antrieb, der ein Antriebsrad mit einer Aussenverzahnung umfasst. Die Arbeitseinheit weist eine korrespondierende Innenverzahnung auf. Das Antriebsrad ist derart zur Arbeitseinheit angeordnet, dass die Aussenverzahnung des Antriebsrads in die Innenverzahnung der Arbeitseinheit eingreift. Der Antrieb treibt das Antriebsrad an und durch das Eingreifen der Aussenverzahnung des Antriebsrades in die Innenverzahnung der Arbeitseinheit, wird die Arbeitseinheit in eine Drehbewegung versetzt.

Das Antriebsrad kann von jedem beliebigen Antrieb angetrieben werden. In einer bevorzugten Ausführungsform handelt es sich um einen manuellen Antrieb, beispielsweise um einen manuellen Antrieb mit einer Schnurzugsrolle.

Vorteilhaft an dieser Anordnung ist beispielsweise, dass das Gerät mit einer reduzierten Anzahl an Bauteilen auskommt, da die Arbeitseinheit direkt vom Antriebsrad bewegt wird.

In einer bevorzugten Ausführungsform der Erfindung ist die Arbeitseinheit an mindestens zwei Lagerelementen positionierbar gelagert, wobei das erste Lagerelement im Zentrum der Arbeitseinheit angeordnet ist, vorzugsweise in einer dafür vorgesehenen Aufnahme der Arbeitseinheit.

Vorzugsweise ist mindestens eines der zwei Lagerelement beabstandet vom ersten Lagerelement angeordnet, wobei der Abstand durch einen Radius der Arbeitseinheit definiert ist. Mindestens eines der zwei Lagerelemente ist am Oberteil des Geräts, vorzugsweise an der Unterseite des Oberteils angebracht. In einer bevorzugten Ausführungsform ist mindestens eines der zwei Lagerelemente hakenförmig ausgebildet. Dies ermöglicht ein einfaches Wechseln der Arbeitseinheit bei gleichzeitig stabiler Lagerung. Besonders bevorzugt sind neben dem zentralen Lagerelement zwei oder drei periphere, hakenförmige Lagerelemente zum sicheren drehbeweglichen Halten der Arbeitseinheit vorgesehen. Bei drei peripheren, hakenförmigen Halteelementen sind diese vorzugsweise auf 0°, 90° und 180° Positionen in Bezug auf den Umfang der Arbeitseinheit, zum Beispiel einer Raffelscheibe, angeordnet. Auf diese Weise ist sichergestellt, dass die Scheibe ausreichend gehalten, gestützt und geführt wird und sie sich noch problemlos von einer Seite in die hakenförmigen Halteelemente einführen, respektive aus diesen entfernen lässt.

Gemäss der Erfindung handelt es sich bei der Arbeitseinheit um eine Schneid-, Reib- oder Raffelscheibe (im Folgenden generell als Schneidscheibe bezeichnet). Die Schneidscheibe wird peripher von einem Tragring umlaufen der eine Innenverzahnung aufweist. Beim Antrieb der Arbeitseinheit greift das Antriebsrad, welches eine Aussenverzahnung aufweist in die Innenverzahnung des Tragrings ein und treibt auf diese Weise die Schneidscheibe an. Die Antriebskraft wird daher nicht wie aus dem Stand der Technik bekannt, im Zentrum der Schneid- oder Raffelscheibe eingeleitet, sondern vom aussenverzahnten Antriebsrad auf die Innenverzahnung der Schneidscheide übertragen. Diese umläuft den Umfang der Schneidscheibe innenseitig. Ein Vorteil dieser Anordnung liegt darin, dass mehr Platz für die Anordnung der Lebensmittelzufuhreinrichtung zur Verfügung steht und der gesamte Radius der Schneid -. oder Raffelscheibe zum Schneiden bereit gestellt werden kann. Weiters steht genügend Platz zur Verfügung um neben dem Antriebsrads noch weitere Räder für eine zusätzliche Übersetzung vorzusehen.

In einer bevorzugten Ausführungsform der Erfindung weist die Schneidscheibe eine erste Seite mit einer ersten Schneidklingen- oder Schneidenanordnung und eine zweite Seite mit einer zweiten Schneidklingen- oder Schneidenanordnung auf. Der innenverzahnte Tragring ist in Bezug auf die Schneidscheibe symmetrisch angeordnet, wobei die Schneidscheibe die Symmetrieebene darstellt. Vorteilhaft an dieser Anordnung ist, dass mit einer Schneidscheibe zwei unterschiedliche Schneid-, Reib- oder Raffelprodukte hergestellt werden können. Die Schneidscheiben gemäss der vorliegenden Erfindung sind vorzugsweise aus Stahlblech hergestellt mit einer Materialstärke von 0.3 bis 0.6 mm, vorzugsweise 0.4mm.

Bei der ersten und zweiten Schneiden- oder Schneidklingenanordnung handelt es sich beispielsweise um eine variable Anzahl an einzelnen Schneidmessern, Klingen oder Schneiden, vorzugsweise zwei bis sechs pro Seite, die es ermöglichen Schneidgut in Scheiben, Stäbchen, Julienne oder andere Formen zu schneiden. Es hat sich als besonders vorteilhaft erwiesen die Schneiden direkt durch Umformen aus dem Scheibenmaterial herzustellen. Durch Anlegen eines hohen Druckes werden dabei die Schneiden in der gewünschten Form aus der Scheibe gestanzt oder tiefgezogen und die eigentliche Schneidkante wird durch Materialfluss in Form gebracht, so dass ein nachträgliches Schleifen der Schneidkante nicht mehr nötig ist. Die Scheiben können zum Beispiel aus einem martensitischen Chromstahlblech mit einem Chromgehalt von 11,5-13,5 % vom Typ AISI 430 bestehen. Der an die Scheidkante angeformte Radius beträgt vorzugsweise weniger als 0.2 mm.

In bevorzugten Ausführungsformen sind eine geometrische Drehachse des Antriebsrads und eine geometrische Drehachse der Arbeitseinheit achsparallel zueinander angeordnet. Die geometrische Drehachse des Antriebsrads schneidet dabei die Arbeitseinheit. Diese Anordnung des Antriebsrads zur Arbeiteinheit ist kompakt, platzsparend und bringt dadurch beim Einbau in den Oberteil des Geräts einen hohen Grad an Gestaltungsfreiheit.

In einer bevorzugten Ausführungsform des erfindungsgemässen Geräts ist weiters eine Einwegkupplung vorgesehen, die dazu eingerichtet ist, in einer ersten Drehrichtung zu sperren und dadurch die Kraft von der Schnurzugrolle oder einem anderen primär angetriebenen Teil des Antriebs auf das Antriebsrad zu übertragen und dieses in eine Drehbewegung zu versetzten. In einer zweiten Drehrichtung befindet sich die Kupplung im Freilauf und entkoppelt das Antriebsrad von der Rückdrehbewegung der Schnurzugrolle oder eines anderen primär angetriebenen Teil des Antriebs. Vorteilhaft an der Einwegkupplung ist, dass die Antriebskraft in der gewünschten Drehrichtung auf das Antriebsrad übertragen und damit das Arbeitsmittel in Arbeitsrichtung angetrieben werden kann. Beim Aufrollen der Zugschnur ist diese jedoch vom Arbeitsmittel entkoppelt und ein Bremsen oder Verklemmen der Schnurrolle wird beim Schneiden, Reiben oder Raffeln von Schneidgut verhindert. Die Einwegkupplung kann mit jeder Art von Antrieb in Verbindung stehen. In einer bevorzugten Ausführungsform handelt es sich um einen manuellen Schnurzugantrieb.

In einer bevorzugten Ausführungsform der Erfindung weist das Gerät zum Bearbeiten von Lebensmitteln eine Sicherheitsvorrichtung mit einem Sperrelement auf, welches dazu eingerichtet ist die Arbeitseinheit in einem Nicht-Betriebszustand zu blockieren und ein Entriegelungselement welches dazu eingerichtet ist das Sperrelement zu betätigen um die Blockierung zu lösen. Das Sperrelement, vorzugsweise am Oberteil des Geräts angebracht, greift in ein Bremsmittel ein, wobei das Bremsmittel Teil der Arbeitseinheit ist. In einer bevorzugten Ausführungsform weist die Arbeitseinheit eine Verzahnung auf, vorzugsweise eine Aussenverzahnung und das Sperrelement greift in diese Verzahnung ein.

Vorzugsweise handelt es sich beim Entriegelungselement um eine Lebensmittelzufuhreinrichtung umfassend zumindest einen Schacht und einen Drücker, wobei der Schacht dazu eingerichtet ist das Entriegelungselement zu betätigen.

In einer weiteren bevorzugten Ausführungsform umfasst das Entriegelungselement eine Lebensmittelzufuhreinrichtung mit einem Schieber und einem mit dem Schieber wirkverbundenen Deckelelement, wobei der Schieber dazu eingerichtet ist das Entriegelungselement zu betätigen.

Der Vorteil der Sicherheitsvorrichtung liegt darin, dass das Sperrelement die Arbeitseinheit blockiert und erst dann freigibt wenn das Entriegelungselement, das Sperrelement betätigt. Das Verletzungsrisiko für den Benutzer wird auf diese Weise reduziert.

Das erfindungsgemässe Gerät kann auf verschiedene Unterteile aufgesetzt werden oder mit verschiedenen Unterteilen lösbar verbunden sein. In einer bevorzugten Ausführungsform handelt es sich beim Unterteil um einen Auffangbehälter. Weitere Ausführungsformen, wie beispielsweise die eines Gestells auf das das erfindungsgemässe Gerät aufgesetzt ist, sind denkbar. Der Oberteil kann alternativ oder zusätzlich an seiner Unterseite oder peripher auch Formschlussmittel aufweisen mit deren Hilfe er sich auf einen Topf oder eine Schüssel passender Grösse aufsetzen lässt.

### KURZE ERLÄUTERUNG ZU DEN FIGUREN

Die Erfindung soll nachfolgend anhand von Ausführungsbeispielen im Zusammenhang mit der Zeichnung näher erläutert werden. Es zeigen:
- Fig. 1: eine bevorzugte Ausführungsform des erfindungsgemässen Gerät in einer Schnittdarstellung,
- Fig. 2: den Oberteil einer bevorzugten Ausführungsform des erfindungsgemässen Geräts in einer Schnittdarstellung,
- Fig. 3: drei verschiedene Ansichten einer Schneidscheibe (Draufsicht (a) auf eine erste Seite, (b) Seitenansicht und Draufsicht (c) auf eine zweite Seite),
- Fig. 4: eine Ausführungsform des Geräts mit einer erfindungsgemässen Sicherheitsvorrichtung mit einem bevorzugten Entriegelungselement, und
- Fig. 5: eine bevorzugte Ausführungen des Scheidgeräts mit einer weiteren erfindungsgemässen Sicherheitsvorrichtung mit einer weiteren bevorzugten Ausführungsform eines Entriegelungselements.

### WEGEZUR AUSFÜHRUNG DER ERFINDUNG

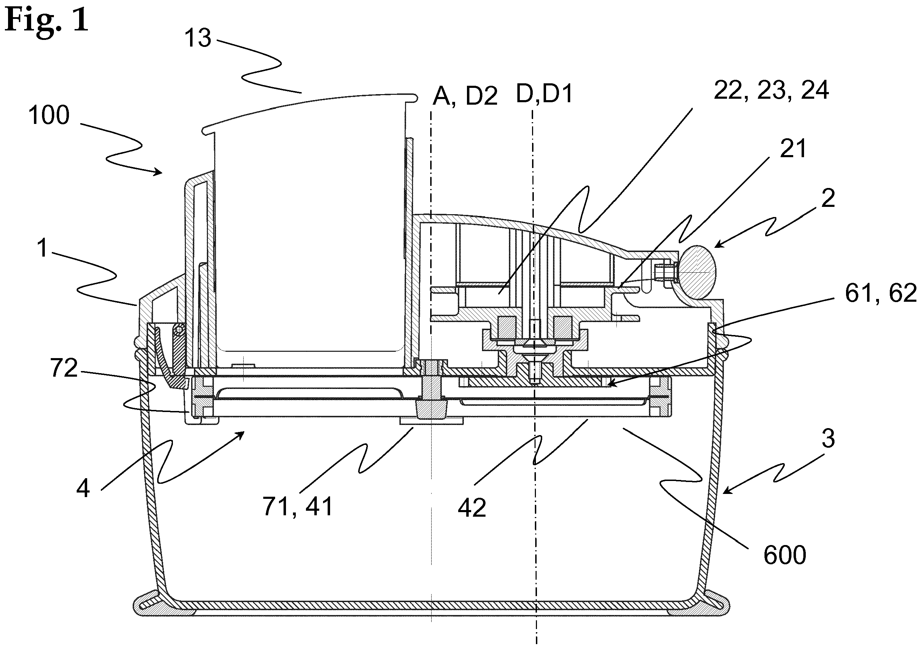

In Figur 1 ist eine erste bevorzugte Ausführungsform des erfindungsgemässen Geräts 100 dargestellt. Das Gerät umfasst einen Oberteil 1 der auf einen Unterteil 3 aufgesetzt ist. Das Gerät 100 verfügt weiters über eine Arbeitseinheit 4, welche eine Schneidscheibe 8 darstellt, eine Lebensmittelzufuhreinheit 13 und einen Antrieb 2. In einer bevorzugten Ausführungsform umfasst der Antrieb 2, eine Schnurzugsrolle 21. In der Schnurzugsrolle 21 ist konzentrisch zur Drehachse D, eine Ausnehmung 22 angeordnet in der sich ein Federelement 23, beispielsweise eine Spiralfeder 24 befindet. Das Federelement 23 ist dabei mit der Schnurzugsrolle 21 derart wirkverbunden, dass bei Betätigung des Antriebs 2, vorzugsweise durch manuelles Ziehen, in einer ersten Drehrichtung die Spiralfeder 24 vorgespannt und in einer zweiten Drehrichtung die Spiralfeder 24 entspannt wird. Das Vorspannen und Entspannen der Spiralfeder 24 führt dazu, dass über ein Antriebsrad 61 die Arbeitseinheit 4 in eine Drehbewegung versetzt wird. In dieser bevorzugten Ausführungsform ist die Schnurzugsrolle 21 derart zum Antriebsrad 61 angeordnet, dass die Drehachse D der Schnurzugsrolle mit einer geometrischen Drehachse D1 des Antriebsrads 61 zusammenfällt. In der bevorzugten Ausführungsform gemäss Figur 1 verläuft die geometrische Drehachse D1 des Antriebsrads 61 parallel zu einer geometrischen Drehachse D2 der Arbeitseinheit 4 respektive einer Zentralachse A des Geräts 100.

Gemäss der Ausführungsform der Figur 1 wird das Antriebsrad 61 welches eine Aussenverzahnung 62 aufweist vom Antrieb 2 betrieben. Die Bewegung des Antriebsrades 61 ist nicht auf die des Antriebs 2 beschränkt. Eine weitere Möglichkeit (nicht dargestellt) ist die Anwendung eines Kurbelantriebs oder eines elektrischen Antriebs. Wird das Antriebsrad 61 in Drehbewegung versetzt, greift die Aussenverzahnung 62 des Antriebsrads in eine Innenverzahnung 63 der Arbeitseinheit 4 ein und versetzt auf diese Weise die Arbeitseinheit 4 in eine Drehbewegung.

Die Arbeitseinheit 4 ist vorzugsweise an mindestens zwei Lagerelementen 71, 72 positionierbar gelagert. Das erste Lagerelement 71 stellt beispielsweise ein Befestigungsmittel dar, welches in einer Aufnahme 41 der Arbeitseinheit 4 angeordnet ist. Das zweite Lagerelement 72 ist in einer bevorzugten Ausführungsform der Erfindung beabstandet vom ersten Lagerelement 71 angeordnet wobei der Abstand dem Radius 42 der Arbeitseinheit 4 entspricht.

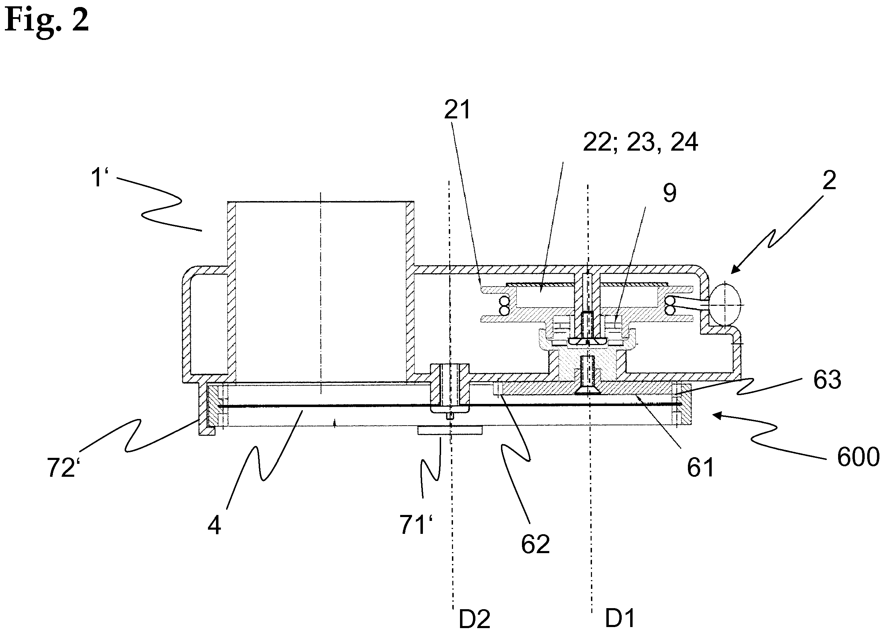

Figur 2 zeigt eine bevorzugte Ausführungsform des Oberteils 1'. Der Antrieb 2 ist über eine Einwegkupplung 9 mit dem Antriebsrad 61 verbunden.

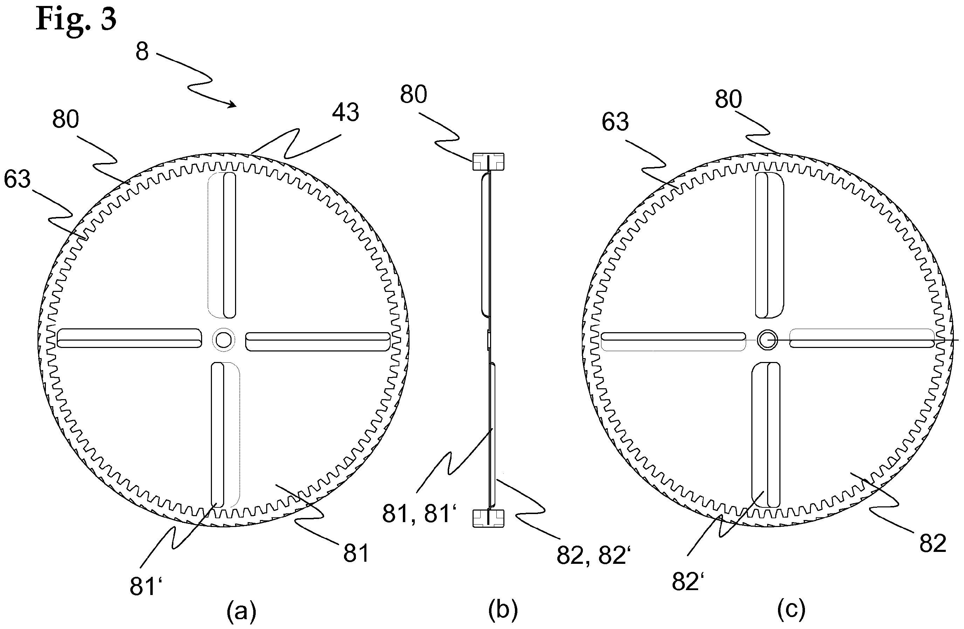

Figur 3(a) zeigt eine erste Seite 81 einer erfindungsgemässen Schneidscheibe 8. Auf der ersten Seite 81 befindet sich eine erste Schneidklingenanordnung 81', die beispielsweise derart ausgebildet ist, dass Gemüse in Scheiben geschnitten werden kann. In der bevorzugten Ausführungsform gemäss der Figur 3(a) wird die Schneidscheibe von einem Tragring 80 umlaufen, der sowohl auf der ersten Seite 81 als auch auf einer zweiten Seite 82 und eine Innenverzahnung 63 aufweist (vgl. auch Figur 3(b), Figur 3(c)). In einer bevorzugten Ausführungsform ist die Schneidscheibe 8 aus einem Metallblech gefertigt und der Tragring 80 aus Kunststoff, wobei die Schneidscheibe 8 und der Tragring 80 als zwei separate Teile gefertigt sind. In einer weiteren Ausführungsform sind die Schneidscheibe 8 und der Tragring 80 einstückig aus Kunststoff gefertigt. Die Klingen der Schneidscheibe bilden separate Einsätze aus Metall.

Figur 3(b) zeigt eine Seitenansicht der Schneidscheibe 8. Die Schneidscheibe 8 weist eine erste Seite 81 mit einer ersten Schneidklingenanordnung 81' und eine zweite Seite 82 mit einer zweiten Schneidklingenanordnung 82' auf. Der Tragring 80 ist dabei so ausgestaltet, dass die Innenerzahnung 63 sowohl auf der ersten Seite 81 als auch auf der zweiten Seite 82 verläuft. In einer bevorzugten Ausführungsform kann die Schneidscheibe 8 je nach gewünschter Schneidqualität wechselseitig zu Einsatz kommen.

Figur 3(c) zeigt eine zweite Seite 82 der Schneidscheibe 8 mit einer zweiten Schneidklingenanordnung 82' umlaufen vom Tragring 80 aufweisend die Innenverzahnung 63.

Die in den Figuren 3(a) bis 3(c) gezeigte erste und zweite Schneidklingenanordnung 81' und 82' zeigt vier Schneidmesser. Die Erfindung ist nicht auf eine Schneidklingenanordnung von vier Schneidmessern beschränkt. In weiteren bevorzugten Ausführungsformen können mehr oder weniger als vier Schneidmesser, beispielsweise drei vorgesehen sein.

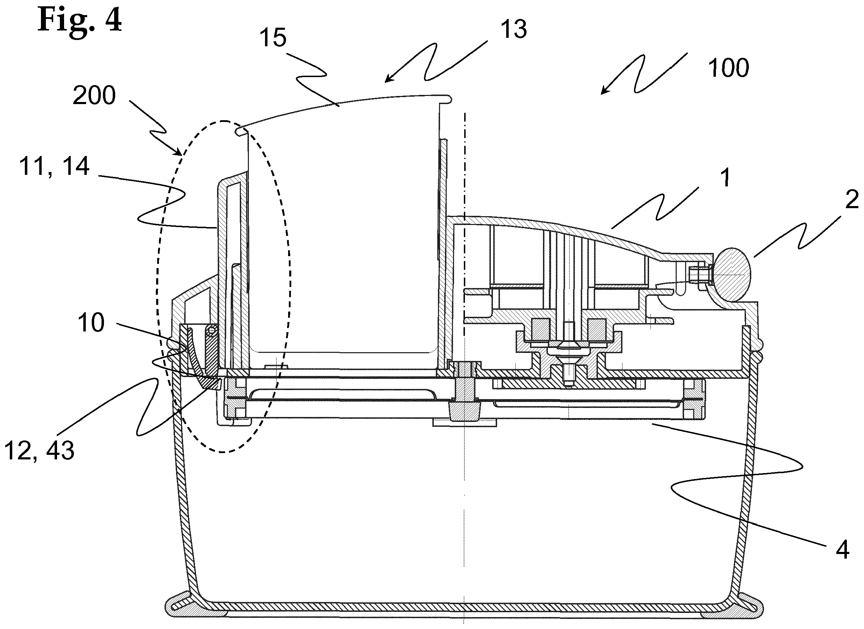

Figur 4 zeigt eine bevorzugte Ausführungsform einer erfindungsgemässen Sicherheitsvorrichtung 200. Die Sicherheitsvorrichtung umfasst ein Entriegelungselement 11 und Sperrelement 10. In der bevorzugten Ausführungsform gemäss der Figur 4 ist das Sperrelement 10 als beweglich gelagertes hakenförmiges Element ausgebildet und am Oberteil 1 des Geräts angeordnet. Bei dem in der Figur 4 dargestellten Zustand ist die Sicherheitsvorrichtung entriegelt. Der Schacht 14 welcher Teil der Lebensmittelzufuhreinrichtung 13 ist, stellt das Entriegelungselement 11 dar. Die Lebensmittelzufuhreinrichtung 13 umfasst den Schacht 14 und den Drücker 15 und stellt eine separate Einheit zum Oberteil 1 dar. In einer bevorzugten Ausführungsform der Erfindung kann die Lebensmittelzufuhreinrichtung 13 auf den Oberteil 1 aufgesteckt werden. Ohne aufgesteckter Lebensmittelzufuhreinrichtung 13 greift das Sperrelement 10 in das Bremsmittel 12 der Arbeitseinheit 4 ein und blockiert die Arbeitseinheit 4. Beim Aufstecken des Schachtes 14 auf den Oberteil 1 des Geräts 100, entriegelt der Schacht 14 das Sperrelement 10 und die Arbeitseinheit 4 kann mit Hilfe des Antriebs 2 in eine Drehbewegung versetzt werden.

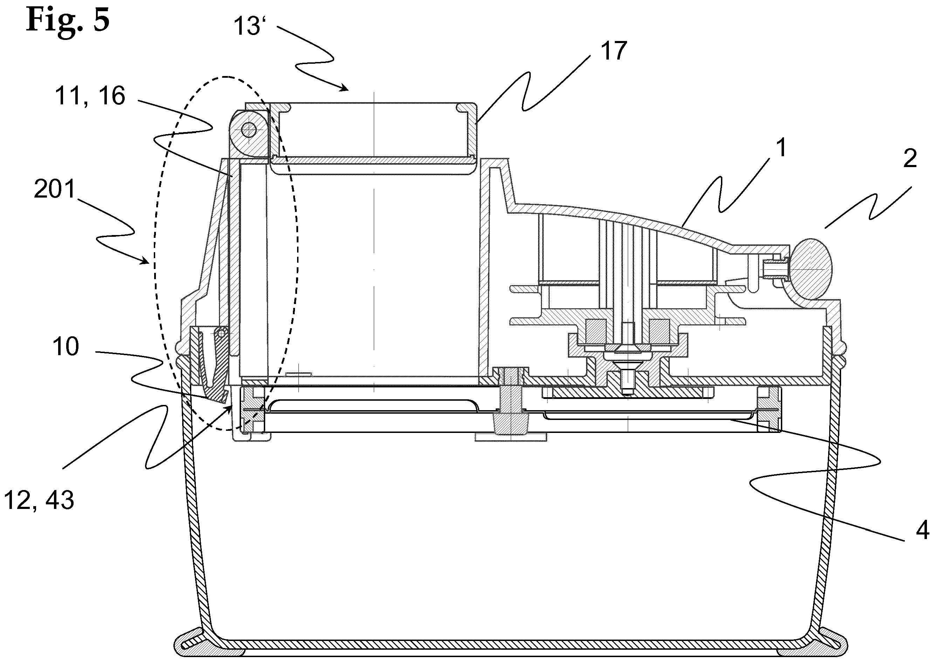

Figur 5 zeigt eine weitere bevorzugte Ausführungsform der Sicherheitsvorrichtung 201 in einem entriegeltem Zustand. In dieser bevorzugten Ausführungsform umfasst die Lebensmittelzufuhreinrichtung 13' einen Schieber 16 und ein Deckelelement 17. Die Lebensmittelzufuhreinrichtung 13' stellt eine separate Einheit zum Oberteil 1 dar.

In einer bevorzugten Ausführungsform der Erfindung kann die Lebensmittelzufuhreinrichtung 13' auf den Oberteil 1' aufgesteckt werden. Ohne aufgesteckter Lebensmittelzufuhreinrichtung 13' greift das Sperrelement 10 in das Bremsmittel 12 der Arbeitseinheit 4 ein und blockiert die Arbeitseinheit 4. Beim Aufstecken des Schiebers 16 auf den Oberteil 1 des Geräts 100, entriegelt der Schieber 16 das Sperrelement 10 und die Arbeitseinheit 4 kann mit Hilfe des Antriebs 2 in eine Drehbewegung versetzt werden.

**Bezugzeichenliste**

| | |
|---|---|
| Gerät | 100 |
| Oberteil | 1, 1' |
| Lebensmittelzufuhreinrichtung | 13, 13' |
| Antrieb | 2 |
| Schnurzugsrolle | 21 |
| Ausnehmung | 22 |
| Federelement | 23 |
| Spiralfeder | 24 |
| Unterteil | 3 |
| Arbeitseinheit | 4 |
| Aufnahme | 41 |
| Radius | 42 |
| Verzahnung | 43 |
| Zentralachse | A |
| Drehachse der Schnurzugsrolle | D |
| Antriebsrads | 61 |
| Aussenverzahnung | 62 |
| Innenverzahnung | 63 |
| erste Lagerelement | 71, 71' |
| zweites Lagerelement | 72, 72' |
| Schneidscheibe | 8 |
| Tragring | 80 |
| erste Seite | 81 |
| zweite Seite | 82 |
| ersten Schneidklingenanordnung | 81' |
| zweiten Schneidklingenanordnung | 82' |
| Einwegkupplung | 9 |
| Sperrelement | 10 |
| Entriegelungselement | 11 |
| Bremsmittel | 12 |
| Schacht | 14 |
| Drücker | 15 |
| Schieber | 16 |
| Deckelelement | 17 |
| geometrische Drehachse des Antriebsrads | D1 |
| geometrische Drehachse der Arbeitseinheit | D2 |
| Sicherheitsvorrichtung | 200 |

## Patentansprüche

1. Gerät (100) zum Bearbeiten von Lebensmitteln mit einem Oberteil (1) und einem Antrieb (2), aufsetzbar auf einen Unterteil (3), umfassend eine mittels dem Antrieb (2) antreibbare und in eine Drehbewegung versetzbare Arbeitseinheit (4), wobei der Antrieb ein Antriebsrad (61) mit einer Aussenverzahnung (62) umfasst und die Arbeitseinheit (4) eine Schneidscheibe (8) mit einer Innenverzahnung (63) umfasst, wobei das Antriebsrad (61) derart zur Arbeitseinheit (4) angeordnet ist, dass die Aussenverzahnung (62) des Antriebsrads (61) in die Innenverzahnung (63) der Arbeitseinheit (4) eingreift und bei Betätigung des Antriebs (2) die Arbeitseinheit (4) in eine Drehbewegung versetzt wird.

2. Gerät (100) nach Anspruch 1, **dadurch gekennzeichnet, dass** der Antrieb (2), welcher vorzugsweise im Oberteil (1) angeordnet ist, eine Schnurzugsrolle (21) umfasst und die Schnurzugsrolle (21) eine konzentrische Ausnehmung (22) aufweist, in der innen liegend ein Federelement (23), vorzugsweise eine Spiralfeder (24), angeordnet ist, wobei das Federelement (23) in einer Wirkverbindung mit der Schnurzugsrolle steht.

3. Gerät (100) nach Anspruch 2, **dadurch gekennzeichnet, dass** in einer ersten Drehrichtung der Schnurzugsrolle (21) das Federelement (23) vorgespannt wird und in einer zweiten Drehrichtung das Federelement (23) entspannt wird und beim Vorspannen und Entspannen des Federelements (23) die Arbeitseinheit (4) in die Drehbewegung versetzt wird.

4. Gerät (100) nach einem der vorangegangenen Ansprüche 2 bis 3, **dadurch gekennzeichnet, dass** eine Zentralachse (A) des Geräts und eine Drehachse (D) der Schnurzugsrolle (21) parallel zu einander angeordnet sind.

5. Gerät (100) nach einem der vorangegangenen Ansprüche, **dadurch gekennzeichnet, dass** der Antrieb (2) gegenüber liegend einer Lebensmittelzufuhreinrichtung (13) angeordnet ist.

6. Gerät nach einem der vorangegangenen Ansprüche, **dadurch gekennzeichnet, dass** die Arbeitseinheit (4) an mindestens zwei Lagerelementen (71; 72) positionierbar gelagert ist, wobei vorzugsweise das mindestens zweite Lagerelement (72) auf einer Unterseite (11) des Oberteils (1) angeordnet ist.

7. Gerät nach Anspruch 6, **dadurch gekennzeichnet, dass** das erste Lagerelement (71) im Zentrum der Arbeitseinheit (4) angeordnet ist, vorzugsweise in einer dafür vorgesehenen Aufnahme (41) der Arbeitseinheit (4).

8. Gerät nach Anspruch 6, **dadurch gekennzeichnet, dass** das mindestens zweite Lagerelement (72) beabstandet vom ersten Lagerelement (71) angeordnet ist, wobei der Abstand durch einen Radius (42) der Arbeitseinheit (4) definiert ist.

9. Gerät nach Anspruch 6, **dadurch gekennzeichnet, dass** das mindestens eines der zwei Lagerelemente (71, 72) hakenförmig ausgebildet ist.

10. Gerät nach Anspruch 1, **dadurch gekennzeichnet, dass** die Schneidscheibe (8) einen Tragring (80) aufweist der die Schneidscheibe (8) peripher um läuft.

11. Gerät nach Anspruch 10, **dadurch gekennzeichnet, dass** das der Tragring (80) die Innenverzahnung (63) aufweist.

12. Gerät nach Anspruch 10, **dadurch gekennzeichnet, dass** der Tragring (80) in Bezug auf die Schneidscheibe (8) symmetrisch angeordnet ist, wobei die Schneidscheibe (8) die Symmetrieebene darstellt.

13. Gerät nach Anspruch 1, **dadurch gekennzeichnet, dass** die Schneidscheibe (8) eine erste Seite (81) mit einer ersten Schneidklingenanordnung (81') und eine zweite Seite (82) mit einer zweiten Schneidklingenanordnung (82') aufweist.

14. Gerät nach einem der vorangegangenen Ansprüche 1, 6 bis 13, **dadurch gekennzeichnet, dass** eine geometrische Drehachse (D1) des Antriebsrads (61) und eine geometrische Drehachse der Arbeitseinheit (D2) achsenparallel zueinander angeordnet sind.

15. Gerät nach einem der vorangegangenen Ansprüche 1, 6 bis 14 **dadurch gekennzeichnet, dass** die geometrische Drehachse (D1) des Antriebsrads das Arbeitseinheit (4) schneidet.

16. Gerät nach einem der vorangegangenen Ansprüche 1, 6 bis 15, **gekennzeichnet durch** eine Einwegkupplung (9), die dazu eingerichtet das Antriebsrad (61) in einer ersten Drehrichtung in eine Rotationsbewegung zu versetzen und in einer zweiten Drehrichtung sich das Antriebsrad (61) im Freilauf befindet.

17. Gerät nach Anspruch 1, **gekennzeichnet durch** ein Sperrelement (10), vorzugsweise ein beweglich gelagertes hakenförmiges Element, welches dazu eingerichtet das Arbeitsmittel (4) in einem Nicht-Betriebszustand zu blockieren und ein Entriegelungselement (11), welches dazu eingerichtet ist das Sperrelement (10) zu betätigen um die Blockierung zu lösen, vorzugsweise dass das Sperrelement (10) in ein Bremsmittel (12) eingreift wobei das Bremsmittel (12) Teil der Arbeitseinheit (4) ist.

18. Gerät nach Anspruch 17, **dadurch gekennzeichnet, dass** das Sperrelement (10) in ein Bremsmittel (12) eingreift wobei das Bremsmittel (12) Teil der Arbeitseinheit (4) ist, wobei vorzugsweise das Bremsmittel (12) als eine Verzahnung (43) ausgebildet ist, vorzugsweise eine Aussenverzahnung und das Sperrelement (10) in diese Verzahnung (43) eingreift.

19. Gerät nach Anspruch 17, **dadurch gekennzeichnet, dass** das Entriegelungselement (11) eine Lebensmittelzufuhreinrichtung (13) umfassend einen Schacht (14) und einen Drücker (15) darstellt, wobei der Schacht (14) und/oder der Drücker (15) dazu eingerichtet sind das Sperrelement (10) zu betätigen.

20. Gerät nach Anspruch 17, **dadurch gekennzeichnet, dass** das Entriegelungselement (11) eine Lebensmittelzufuhreinrichtung (13) umfassend einen Schieber (16) und einen mit dem Schieber (16) wirkverbundenen Deckelelement (17) darstellt, wobei der Schieber (16) eingerichtet ist das Sperrelement (11) zu betätigen.

## Claims

1. Device (100) for processing foodstuffs, having an upper part (1) and a drive (2) capable of being placed onto a lower part (3), comprising a work unit (4) that by means of the drive (2) is drivable and capable of being set in rotary motion, wherein the drive comprises a drive wheel (61) having an external toothing (62), and the work unit (4) comprises a cutting disk (8) having an internal toothing (63), wherein the drive wheel (61) in relation to the work unit (4) is disposed in such a manner that the external toothing (62) of the drive wheel (61) engages in the internal toothing (63) of the work unit (4), and the work unit (2), when activating the drive (2), is set in rotary motion.

2. Device (100) according to Claim 1, **characterized in that** the drive (2), which is preferably disposed in the upper part (10), comprises a pull cord roller (21) and the pull cord roller (21) has a concentric clearance (22) in which a spring element (23), preferably a helical spring (24) is disposed so as to lie in said concentric clearance (22), wherein the spring element (23) is operatively connected to the pull cord roller.

3. Device (100) according to Claim 2, **characterized in that** the spring element (23) is pretensioned in a first rotating direction of the pull cord roller (21), and the spring element (23) is relaxed in a second rotating direction, and the work unit (4), when pre-tensioning and relaxing the spring element (23), is set in rotary motion.

4. Device (100) according to one of preceding Claims 2 to 3, **characterized in that** a central axis (A) of the device and a rotation axis (D) of the pull cord roller (21) are disposed so as to be mutually parallel.

5. Device (100) according to one of the preceding claims, **characterized in that** the drive (2) is disposed so as to be opposite a foodstuff infeed installation (13).

6. Device according to one of the preceding claims, **characterized in that** the work unit (4) is mounted so as to be positionable on at least two bearing elements (71; 72), wherein at least the second bearing element (72) is preferably disposed on a lower side (11) of the upper part (1).

7. Device according to Claim 6, **characterized in that** the first bearing element (71) is disposed in the centre of the work unit (4), preferably in a receptacle (41) provided therefore in the work unit (4) .

8. Device according to Claim 6, **characterized in that** at least the second bearing element (72) is disposed so as to be spaced apart from the first bearing element (71), wherein the spacing is defined by a radius (42) of the work unit (4).

9. Device according to Claim 6, **characterized in that** that at least the one of the two bearing elements (71, 72) is configured so as to be hook-shaped.

10. Device according to Claim 1, **characterized in that** the cutting disk (8) has a support ring (80) which peripherally encircles the cutting disk (8).

11. Device according to Claim 10, **characterized in that** the support ring (80) comprises the internal toothing (63).

12. Device according to Claim 10, **characterized in that** the support ring (80) is disposed so as to be symmetrical in relation to the cutting disk (8), wherein the cutting disk (8) represents the symmetry plane.

13. Device according to Claim 1, **characterized in that** the cutting disk (8) has a first side (81) having a first cutting blade assembly (81'), and a second side (82) having a second cutting blade assembly (82') .

14. Device according to one of preceding Claims 1, 6 to 13, **characterized in that** a geometric rotation axis (D1) of the drive wheel (61) and a geometric rotation axis of the work unit (D2) are disposed so as to be mutually axially parallel.

15. Device according to one of preceding Claims 1, 6 to 14, **characterized in that** the geometric rotation axis (D1) of the drive wheel intersects the work unit (4).

16. Device according to one of preceding Claims 1, 6 to 15, **characterized by** a unidirectional coupling (9) which is specified for setting in rotary motion the drive wheel (61) in a first rotating direction, the drive wheel (61) being in freewheeling mode in a second rotating direction.

17. Device according to Claim 1, **characterized by** a locking element (10) preferably a movably mounted hook-shaped element, which in a non-operating state is specified for locking the work means (4), and by an unlocking element (11) which is specified for activating the locking element (10) so as to release the blocking mechanism, preferably such that the locking element (10) engages in a brake means (12), wherein the brake means (12) is part of the work unit (4).

18. Device according to Claim 17, **characterized in that** the locking element (10) engages in a brake means (12), wherein the brake means (12) is part of the work unit (4), wherein the brake means (12) is preferably configured as a toothing (43), preferably an external toothing, and the locking element (10) engages in said toothing (43).

19. Device according to Claim 17, **characterized in that** the unlocking element (11) represents a foodstuff infeed installation (13) comprising a duct (14) and a pusher (15), wherein the duct (14) and/or the pusher (15) are/is specified for activating the locking element (10).

20. Device according to Claim 17, **characterized in that** the unlocking element (11) represents a foodstuff infeed installation (13) comprising a slide (16) and a cover element (17) that is operatively connected to the slide (16), wherein the slide (16) is specified for activating the locking element (11).

## Revendications

1. Appareil (100) pour traiter des aliments, comprenant une partie supérieure (1) et un entraînement (2) pouvant être placé sur une partie inférieure (3), comprenant une unité de travail (4) pouvant être entraînée au moyen de l'entraînement (2) et pouvant être animée d'un mouvement de rotation, l'entraînement comprenant une roue d'entraînement (61) avec une denture extérieure (62) et l'unité de travail (4) comprenant un disque de coupe (8) avec une denture intérieure (63), la roue d'entraînement (61) étant disposée par rapport à l'unité de travail (4) de telle sorte que la denture extérieure (62) de la roue d'entraînement (61) vienne en prise dans la denture intérieure (63) de l'unité de travail (4) et que l'unité de travail (4) soit animée d'un mouvement de rotation lors de l'actionnement de l'entraînement (2).

2. Appareil (100) selon la revendication 1, **caractérisé en ce que** l'entraînement (2), qui est disposé de préférence dans la partie supérieure (1), comprend un rouleau à cordon de tirage (21) et le rouleau à cordon de tirage (21) présente un évidement concentrique (22) dans lequel est disposé, à l'intérieur, un élément de ressort (23), de préférence un ressort spiral (24), l'élément de ressort (23) étant en liaison fonctionnelle avec le rouleau à cordon de tirage.

3. Appareil (100) selon la revendication 2, **caractérisé en ce que** l'élément de ressort (23) est précontraint dans un premier sens de rotation du rouleau à cordon de tirage (21) et l'élément de ressort (23) est détendu dans un deuxième sens de rotation, et l'unité de travail (4) est animée d'un mouvement de rotation lors de la précontrainte et de la détente de l'élément de ressort (23).

4. Appareil (100) selon l'une quelconque des revendications précédentes 2 et 3, **caractérisé en ce qu'**un axe central (A) de l'appareil et un axe de rotation (D) du rouleau à cordon de tirage (21) sont disposés parallèlement l'un à l'autre.

5. Appareil (100) selon l'une quelconque des revendications précédentes, **caractérisé en ce que** l'entraînement (2) est disposé à l'opposé d'un dispositif d'alimentation d'aliments (13).

6. Appareil selon l'une quelconque des revendications précédentes, **caractérisé en ce que** l'unité de travail (4) est supportée de manière à pouvoir être positionnée au niveau d'au moins deux éléments de palier (71 ; 72), de préférence au moins le deuxième élément de palier (72) étant disposé sur un côté inférieur (11) de la partie supérieure (1).

7. Appareil selon la revendication 6, **caractérisé en ce que** le premier élément de palier (71) est disposé au centre de l'unité de travail (4), de préférence dans un logement (41) de l'unité de travail (4) prévu à cet effet.

8. Appareil selon la revendication 6, **caractérisé en ce qu'**au moins le deuxième élément de palier (72) est disposé à distance du premier élément de palier (71), la distance étant définie par un rayon (42) de l'unité de travail (4).

9. Appareil selon la revendication 6, **caractérisé en ce qu'**au moins l'un des deux éléments de palier (71, 72) est réalisé en forme de crochet.

10. Appareil selon la revendication 1, **caractérisé en ce que** le disque de coupe (8) présente une bague de support (80) qui s'étend sur la périphérie du disque de coupe (8).

11. Appareil selon la revendication 10, **caractérisé en ce que** la bague de support (80) présente la denture intérieure (63).

12. Appareil selon la revendication 10, **caractérisé en ce que** la bague de support (80) est disposée symétriquement par rapport au disque de coupe (8), le disque de coupe (8) constituant le plan de symétrie.

13. Appareil selon la revendication 1, **caractérisé en ce que** le disque de coupe (8) présente un premier côté (81) avec un premier agencement de lame de coupe (81') et un deuxième côté (82) avec un deuxième agencement de lame de coupe (82').

14. Appareil selon l'une quelconque des revendications 1 ou 6 à 13, **caractérisé en ce qu'**un axe de rotation géométrique (D1) de la roue d'entraînement (61) et un axe de rotation géométrique de l'unité de travail (D2) sont disposés de manière axialement parallèle l'un à l'autre.

15. Appareil selon l'une quelconque des revendications 1 ou 6 à 14, **caractérisé en ce que** l'axe de rotation géométrique (D1) de la roue d'entraînement coupe l'unité de travail (4).

16. Appareil selon l'une quelconque des revendications 1 ou 6 à 15, **caractérisé par** un embrayage unidirectionnel (9) qui est prévu pour animer d'un mouvement de rotation la roue d'entraînement (61) dans un premier sens de rotation, la roue d'entraînement (61) étant en roue libre dans un deuxième sens de rotation.

17. Appareil selon la revendication 1, **caractérisé par** un élément de blocage (10), de préférence un élément en forme de crochet supporté de manière déplaçable, qui est prévu pour bloquer le moyen de travail (4) dans un état de non fonctionnement, et un élément de déverrouillage (11) qui est prévu pour actionner l'élément de blocage (10) de manière à desserrer le blocage, de préférence en ce que l'élément de blocage (10) s'engage dans un moyen de freinage (12), le moyen de freinage (12) faisant partie de l'unité de travail (4).

18. Appareil selon la revendication 17, **caractérisé en ce que** l'élément de blocage (10) s'engage dans un moyen de freinage (12), le moyen de freinage (12) faisant partie de l'unité de travail (4), le moyen de freinage (12) étant de préférence réalisé sous forme de denture (43), de préférence une denture extérieure, et l'élément de blocage (10) s'engageant dans cette denture (43).

19. Appareil selon la revendication 17, **caractérisé en ce que** l'élément de déverrouillage (11) constitue un dispositif d'alimentation d'aliments (13) comprenant un puits (14) et un poussoir (15), le puits (14) et/ou le poussoir (15) étant prévus pour actionner l'élément de blocage (10).

20. Appareil selon la revendication 17, **caractérisé en ce que** l'élément de déverrouillage (11) constitue un dispositif d'alimentation d'aliments (13) comprenant un coulisseau (16) et un élément de couvercle (17) en liaison fonctionnelle avec le coulisseau (16), le coulisseau (16) étant prévu pour actionner l'élément de blocage (11).
